# EUROPEAN PATENT SPECIFICATION

(11) **EP 2 432 830 B1**
(45) Date of publication and mention of the grant of the patent: **10.07.2013**
(21) Application number: 10724339.6
(22) Date of filing: 18.05.2010
(51) Int. Cl.: C08L 3/02, C08L 23/08, C08L 29/04, C08L 67/00, C08L 67/04, C08L 99/00, C08L 89/00

(54) **BIOPLASTICS**
BIOKUNSTSTOFFE
BIOPLASTIQUES

(30) Priority: 19.05.2009 EP 09160670; 01.12.2009 WO PCT/NL2009/050730
(43) Date of publication of application: 28.03.2012
(73) Proprietor: Wacker Chemie AG, 81737 München (DE); Stichting Kennis Exploitatie RB, 3601 XG Rotterdam (NL)
(72) Inventor: TANGELDER, Robert, NL-1251 NR Laren (NL); WEBER, Karl, 84508 Burgkirchen (DE); VAN DER MEIJDEN, Jacobus, NL-2275 XP Voorburg (NL); PLIJTER, Johannes, NL-3921 BA Elst (NL); VAN SOEST, Jeroen, NL-7037 DE Beek (NL); SCHENNINK, Geraldus, NL-7031 EB Wehl (NL)
(74) Representative: Ege, Markus
(86) International application number: PCT/EP2010/056762
(87) International publication number: WO 2010/133560

(56) References cited:
- EP-A- 1 384 811
- EP-A1- 1 241 216
- WO-A2-93/05668
- DE-A1- 19 648 616
- DE-A1- 19 802 718
- FR-A- 2 872 168
- US-A1- 2006 043 629
- US-B2- 7 148 272

## Description

### FIELD OF THE INVENTION

The present invention rests in the field of biodegradable materials based on flours and polymers, the manufacture thereof and their thermomechanical processing.

### BACKGROUND OF THE INVENTION

Synthetic polymers are used in very numerous industrial fields, such as in the packaging field, because they are often easily moulded, have very good physicochemical properties, and are cheap. However, the principal disadvantage is that these materials cannot be biodegraded, after use, via natural and ecological pathways.

To that purpose, nowadays starch is frequently used in short use applications such as packaging, containers and cultivation articles. Starch, in particular destructured or destructurized starch, is however generally hard and brittle in the dried state or even at low water contents below 10%, and cannot be moulded at the high temperatures typically employed in thermoforming or moulding shaped articles, sheets or films. Mouldability can be enhanced by additives such as plasticizers like glycerol being able te reduce the melting temperature of starch below its decomposition temperature as described in US5362777. However, resulting products will be unstable and properties will diminish in time due to migration or even loss off plasticizers during storage and use. Furthermore, products will remain highly water and humidity sensitive. The mouldability is also increased by adding thermoplastic polymers (synthetic oil-based or renewable-based as well as non-biodegradable or biodegradable) in order to obtain an extrudable or injection mouldable material. Various thermoplastic polymers for admixing or blending are proposed in the art. Good results in terms of processability and overall biodegradability - however not always at competitive price levels - are obtained with (biodegradable) (vinyl) ester (co)polymers.

This combination of starch and thermoplastic polymers is taught in various published patent applications, such as EP-327.505 [Warner-Lambert company], US-2006/0264539 [Wacker Polymer Systems GmbH], WO-99/29733 [Rodenburg Veevoeders BV] and US 6,958,369 [Biop Biopolymer Technologies AG]. Disclosed in the art are starches originating from various sources, such as potato starch, corn starch, wheat starch, rice starch and tapioca starch. The starch may be used in natural form, as destructured starch, and as chemically and/or physically modified starch. Potato starch is preferred. In all cases, water is added to the starch in defined proportions. As a result of adding water and thermomechanical treatments, the internal bonds are broken and the material becomes softer and mouldable.

US 7,148,272 [Ulice SA] discloses a biodegradable material based on a dispersive blend, e.g. an inhomogeneous mixture of polymer and cereal flour. The polymer is selected for its mechanical properties and its ability to be extruded. In the process the cereal flour is first subjected to a controlled drying in order to eliminate the moisture so as to avoid excessive degassing during subsequent moulding steps. As demonstrated in Fig 1 in US 7,148,272, it is only after drying that the dried flour granules and plastics, such as non-biodegradable polypropylene, are moulded together by (dry blend) dual injection, thus yielding a dispersive blend of inadequately compatible components having properties which are considered inferior for the applications in the field of the invention; for instance, the mechanical properties, such as elongation, will decrease and more brittle products will be obtained. Although the specification of US 7,148,272 mentions a desired water content of 0 - 30 wt%, the only working example describes a water content as little as 1.2 wt%. It involves cooking extrusion at 190 °C, at which temperature flour containing substantive amounts of water would decolour or even char. The skilled person thus realizes that drying of the flour of essence in that reference, and that the maximum range provided in the specification is far from realistic. Further, US 7,148,272 proposes extremely broad extrusion temperatures ranging between 10 and 500 °C. It is however noted that charring occurs at the high end, whereas the starch in the flour does not melt or is not fully destructurized at 10 °C. It requires at least temperatures of 100°C to achieve sufficient melting and destructurization. The effects of dual injection and temperature are demonstrated in the examples attached to the present specification. Finally, US 7,148,272 excludes the use of plasticizers such as glycerol or urea.

DE 19802718 discloses biodegradable polymer blends based on biodegradable thermoplastic polymers, such as polyesters or polyvinyl alcohol, and starch, provided for as "Mehl, Griess oder Schrot". They use finely or coarsely milled cereals without a sifting step, having thereby high levels fibres and ash. Polyvinyl alcohol, ethylenevinyl alcohol or polyvinyl pyridone for instance are applied for homogenizing the different components of the polymer blends.

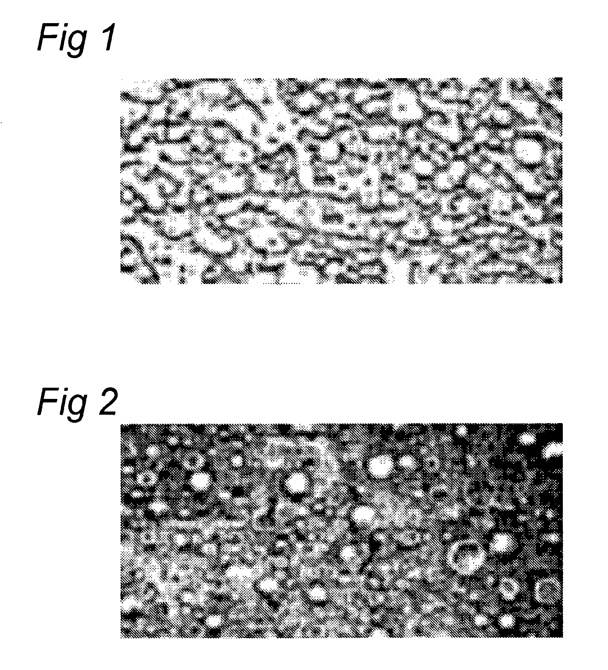

Likewise, FR2872168 and FR2923488 lack compatibilizing polymers and do not take any action to prevent a dispersive blend from hydrophobic polymers in a starch matrix from being formed. The structure is again that presented in Fig. 1 enclosed.

Dispersive blends comprising flour are also known from WO 2006/054156: A component with a base of starch is blended with a relatively small amount of polyvinyl alcohol fibers, wherein the starch is provided by cereal flour. This system differs from foregoing in that it does not involve a hydrophobic polymer. The hydrophilic PVA (i.e. polyvinylalcohol or PVOH) fibers provide the composition with a lattice structure for reinforcement. Because it involves hydrophilic components only, the starch and polyvinylalcohol fibres are compounded using a single-screw extruder. As demonstrated in the accompanying examples IV and V, the polyvinylalcohol fibers thus dispersed in a starch does not provide sufficient mechanical improvement. It should be added that the combination of starch and polyvinylalcohol also disadvantageously renders the product sensitive to water. A water-resistant coating is required.

EP-A 1282662 (Biop) discloses thermoplastic polymer blends obtained by the acidic catalyzed conversion of thermoplastic starch (TPS), hydrolysed polyvinyl acetate, e.g. polyvinyl alcohol, and further synthetic polymers such as aliphatic polyesters, polyvinyl acetate, starch derivatives or cellulose derivatives for instance. Polyvinyl acetate and polyvinyl alcohol are applied as two separate components and not as single polymer composition, e.g. not in form of single polymer powders or protective colloid stabilized aqueous polymer dispersions. Furthermore, EP-A 1282662 mentions exclusively starch containing compositions, but no flour containing compositions. The application of acidic catalysts furnish products which tend to be unstable during use and storage.

Various other documents also describe the use reactive pathways, like J Environm Pol Degr Vol 5 pp 111, using cross-linkers with PVA, as ways to overcome stability issues with starch based bioplastics. However, this reduces the thermoplastic properties making the products more as thermoset plastics resulting in a more difficult shaping or moulding step. US5320669 discloses a way of cross-linking the protein and starch to overcome stability, mechanical and water sensitivity issues.

EP-A-0404723 (Warner-Lambert) discloses a composition containing destructurized starch and at least one polymer containing two functionalities amongst which vinyl alcohol or polyvinyl alcohol. Only starch is mentioned not flour.

Starch and flour behave totally different with respect to thermoplastic processing. From H. N. Soh, Cereal Chem. 83(5), pages 513 to 519, it is even known that native flour and reconstituted flour behave totally different, such as with respect to gelatinization behaviour or processing behaviour. Reconstituted flour is a composition obtained by simple mixing of the individual, pure components of native flour in the respective amounts.

DE19648616 describes the granulation of thermoplastic processable polymer blends containing fractionated cereal flour, aqueous polymer dispersions, such as polyvinyl esters and/or high amounts of polyvinyl alcohol (PVOH), and water. Water is required for the granulation and has to be removed in a separate step for obtaining a blend having thermoplastic properties. Furthermore, the PVOH content is high making the products still water sensitive. Actually the use of a meal or fractionated cereal, but not the use of a flour is described.

Outside the field of biodegradable compositions, EP-A1384811 pertains to binding agents in paper manufacture, particularly combinations of starch and polyvinylamine. Considering the application mentioned there, water dispersibility is essential, and hydrophobic polymers are thus avoided.

US 2003/0069336 refers to compositions for wood-polymer composites containing wood flour, which is void off cereal components like proteins or gluten, a polyol ester compound and a thermoplastic resin which are polymers from ethylenically unsaturated monomers. US 2003/0069336 discloses no composition containing flour originated from vegetables such as cereals.

B. Shi, Journal of Polymers and the Environment, Pages 133-141 describes loose-fill packaging sponges obtained by extrusion from mixtures of hydroxypropylated amylomaize and wheat starches, synthetic polymer such as polyvinyl alcohol, water, blowing agents, nucleating agents. However, such loose fill have high bulk densities compared to expanded polystyrene and, thus, is very material intensive. The use of modified starches makes the product expensive.

M. A. Hanna, Packaging Technology and Science, Volume 21 Issue 3, Pages 171 - 183, describes loose-fill packaging foams made from starch- and polystyrene containing formulations. Furthermore, polystyrene is non-biodegradable.

DE-A 102004024251 describes a process and equipment for the preparation of a shaped foam based on an aqueous suspension containing protein-containing biopolymers and fine particle additives. Natural fibers are mixed into the foam. However, the products made will be brittle in nature without the necessary resilience for foam application such as loose-fill and foam packaging application.

US 5153037 (National Starch) discloses a chemically modified flour based expanded shaped product, preferably having at least 40% amylose, possibly containing additionally up to 10% polyvinyl alcohol. The use of the PVOH is as plasticization of the starch matrix. Thereby, it reduces the strength and stiffness of a product. The use of solely PVOH does not solve the problem of rendering the product less water sensitive or sufficiently increasing the mechanical properties, therefore also chemical modification of the flour is used or high levels of amylose should be present.

WO0246295 (Clextral/Ulice) discloses a flour based expanded product by extrusion cooking. Various other patents also mention the use of polyvinyl alcohol to improve the properties of foam or expanded starch or flour products such as WO19992018325. Such products show low mechanical properties and-/or high water sensitivity. This also accounts for a paper from Lui and Peng (J. Food Engin Vol 70 (2005) pp. 171-182) describing corn grit - PVOH foams and a paper from Song (Carbohydrate Polymers Vol 63, 2006 pp. 466-475) describing wheat flour foams. Hence, in the art a need exists to further improve renewable, biodegradable extrusion products and the process of obtaining these, in particular in terms of economic use of base materials, improved biodegradability and water-insensitivity. A further particular lack of known biodegradable materials is their presence in the form of dispersive or inhomogeneous blends which lead to products not fully meeting the technical requirements in many technical fields, such as mechanical properties.

### SUMMARY OF THE INVENTION

It is therefore an object of the present application to provide simplified thermomechanical processing methods for obtaining biodegradable bioplastic materials by making use of economically favourable flours which are not processed to a solely starch fraction but also include the fibers, non-starch polysaccharides and proteins which will contribute to the molecule structure of the bioplastic materials and its specific functionalities other than conventional starch based bioplastic materials (and above all with improved renewability). Therefore it is also an objective of the present invention to provide processes in which flours and polymers, particularly hydrophobic polymers, are homogeneously or co-continuously mixed. It is another objective to provide bioplastic materials that have improved properties, particularly in terms of biodegradability, mechanical and barrier properties (e.g. flexibility) and water-insensitivity.
The inventors have found that the objects of the invention are achieved and disadvantages existing in the field reduced or even eliminated by thermomechanical processing mixtures containing flours and polymers stabilized with protective colloid and present in the form of their water-redispersible polymer powders or aqueous polymer dispersions and based on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides, whereby the mixtures contain less than 12% by weight of Polyvinyl alcohol, based on the total amount of polymeric components of the mixture. The thermomechanical processing yields thermoplastic processable homogeneous or co-continuous products, e.g. suitable for thermoforming or extrusion for instance. The homogeneous or co-continuous structure of said products contributes to the advantageous technical properties and biodegradability of the products of the instant invention.

The present insights make it possible not only to eliminate all of the starch extraction techniques but also to use the properties of certain constituents of the flour which leads to an improvement of the mechanical performance and flexibility of the instant products due to the presence of fibers, non-starch polysaccharides and proteins present in the flour. Particularly, the hydrophobic gluten, lipids and further proteins present in the flour are believed to add to the resistance to water of the bioplastic material whereas respective products based on starch, e. g. not flour, often results in undesired water sensitivity. These non-starch components also influence the barrier properties and making stronger materials by having stronger network structures (by protein glutenin networks). Fibrous components are also believed to contribute in terms of mechanical properties acting as functional fillers. The instant thermomechanical processing methods also contribute significantly to these improvements.
Furthermore, flour is produced in less processing steps without the use of water leading to a more sustainable solution. Flour making gives less waste products and waste water and saves various energy consuming drying steps. Flour or meal are interesting cheaper alternatives for starch. The use of flours will also result in lower impact on the environment (reduced carbon dioxide emission, reduced dependency on fossil fuels, increased sustainability). It is thus thought that the LCA (life cycle analyses) of a flour based product will be better compared to a starch-based material. Furthermore, it is believed that the combination of the various constituents in flour (being a mixed substrate consisting of carbohydrates and starch) contributes to enhance the biodegradation of the instant bioplastic products by synergistic effects.

### DETAILED DESCRIPTION OF THE INVENTION

### Thermoplastic processable compositions (base compositions)

In a first aspect, the invention thus pertains to thermoplastic processable compositions (base compositions) comprising one or more flours, one or more polymers, optionally plasticizers, optionally fillers and optionally additives, characterized in that at least one of the polymers is stabilized with protective colloid and present in the form of its water-redispersible polymer powder or as aqueous polymer dispersion and based on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides, whereby the compositions contain less than 12% by weight of polyvinyl alcohol, based on the total amount of polymeric components of the composition.

Preferably, the base compositions contain less than 10% by weight, more preferably 0.001 to 10% by weight, even more preferably 0.1 to 10% by weight and most preferably 0.1 to 7% by weight of polyvinyl alcohol. Polyvinyl alcohol is obtainable by saponification of vinyl acetate homo- or copolymers and is described with more detail below.

Polymeric components have generally an average molecular weight of more than 500 g/mol, preferably more than 1000 g/mol.

Flour generally contains starch, fibers, non-starch polysaccharides and proteins.

### Thermoplastic processable multi-component compositions

In another aspect, the invention pertains to thermoplastic processable multi-component compositions comprising one or more flours, two or more polymers, optionally plasticizers, optionally fillers and optionally additives, characterized in that at least one of the polymers is stabilized with protective colloid and present in the form of its water-redispersible polymer powder or as aqueous polymer dispersion and based on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides, and that at least one of the polymers is a biopolymer, whereby the compositions contain less than 12% by weight of polyvinyl alcohol, based on the total amount of polymeric components of the composition.

The same amounts of polyvinyl alcohols are preferred, more preferred, even more preferred or most preferred for the multi-component compositions as specified above for the base compositions. The same is true for the polymeric components and the constituents of the flour mentioned for the base compositions.

All the embodiments of the common features of the base compositions and the thermoplastic processable multi-component compositions described in the following apply to both of said compositions provided that it is not explicitly stated anything to the contrary.

### Polymers in the form of water-redispersible polymer powders or as aqueous polymer dispersions

Polymer powders redispersible in water denote polymer compositions, obtained by drying of respective aqueous dispersions of base polymers in the presence of water-soluble drying aids, such as protective colloids like polyvinyl alcohol. Due to this process the fine resin particles of the base polymer are enclosed or encased by the water-soluble drying aid. The drying aids provide a shell around the resin particles and prevent the polymer powder from blocking or sticking together. Upon redispersion of the polymer powder in water the drying aids are dissolved in water and the base polymer is released in the form of primary particles redispersed in water (Schulze J. in TIZ, No. 9, 1985). Aqueous polymer dispersions are obtainable by polymerization of unsaturated monomers in water in the presence of protective colloids and/or emulgators or upon redispersion of polymer powders in water. This means polymer powders are differ from mere solid resins, for instance.

In the context of the invention, the term "mixture" is considered interchangeable by "blend".

Appropriate polymers are based on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides.

Preferred vinyl esters are vinyl acetate, vinyl propionate, vinyl butyrate, vinyl-2-ethylhexanoate, vinyl laurate, 1-methylvinyl acetate, vinyl pivalate and vinyl esters of α-branched monocarboxylic acids having from 9 to 13 carbon atoms, for example VeoVa9R or VeoVa10R (trade names of Shell). Particular preference is given to vinyl acetate.

Preferred methacrylic esters or acrylic esters are methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate. Preference is given to methyl acrylate, methyl methacrylate, n-butyl acrylate and 2-ethylhexyl acrylate.

Preferred olefins and dienes are ethylene, propylene and 1,3-butadiene. Preferred vinylaromatics are styrene and vinyltoluene. A suitable vinyl halide is vinyl chloride.

If appropriate, from 0.05 to 20% by weight, preferably from 1 to 10% by weight, based on the total weight of the base polymer, of auxiliary monomers can be copolymerized in. Examples of auxiliary monomers are ethylenically unsaturated monocarpboxylic and dicarboxylic acids, preferably acrylic acid, methacrylic acid, fumaric acid and maleic acid; ethylenically unsaturated carboxamides and carboxylic nitriles, preferably acrylamide and acrylonitrile; monoesters and diesters of fumaric acid and maleic acid, e.g. the diethyl and diisopropyl esters, and also maleic anhydride, ethylenically unsaturated sulfonic acids or their salts, preferably vinylsulfonic acid, 2-acrylamido-2-methylpropanesulfonic acid. Further examples are precrosslinking comonomers such as multiply ethylenically unsaturated comonomers, for example divinyl adipate, diallyl maleate, allyl methacrylate or triallyl cyanurate, or postcrosslinking comonomers, for example acrylamidoglycolic acid (AGA), methyl methylacrylamido-glycolate (MAGME), N-methylolacrylamide (NMA), N-methylolmethacrylamide (NMMA), N-methylol allyl carbamate, alkyl ethers such as isobutoxy ether or the ester of N-methylolacrylamide, of N-methylolmethacrylamide and of N-methylol allyl carbamate. Also suitable are epoxy-functional comonomers such as glycidyl methacrylate and glycidyl acrylate. Further examples are silicon-functional comonomers such as acryloxypropyltri(alkoxy)silanes and methacryloxypropyltri(alkoxy)silanes, vinyl-trialkoxysilanes and vinylmethyldialkoxysilanes, in which, for example, methoxy, ethoxy and ethoxypropylene glycol ether radicals can be present as alkoxy groups. Mention may also be made of monomers having hydroxy or CO groups, for example hydroxyalkyl methacrylates and acrylates, e.g. hydroxyethyl, hydroxypropyl or hydroxybutyl acrylate or methacrylate and also compounds such as diacetoneacrylamide and acetylacetoxyethyl acrylate or methacrylate. Further examples are vinyl ethers such as methyl, ethyl or isobutyl vinyl ether.

Examples of suitable polymers are homopolymers or copolymers which contain one or more monomers from the group vinyl acetate, vinyl esters of α-branched monocarboxylic acids having from 9 to 13 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene.

Preferred are vinyl ester homopolymers, copolymers from one or more vinyl esters with ethylene, copolymers from vinyl acetate with ethylene and one or more further vinyl esters, such as vinyl esters of α-branched monocarboxylic acids having from 9 to 13 carbon atoms, copolymers from one or more vinyl esters with ethylene and acrylic esters, copolymers from n-butyl acrylate, 2-ethylhexyl acrylate and/or methyl (meth)acrylate, copolymers from styrene and one or more (meth)acrylic ester copolymers such as of unbranched or branched alcohols having from 1 to 15 carbon atoms, such as methyl(meth) acrylate, ethyl (meth)acrylate, propyl (meth)acrylate, n-butyl (meth)acrylate, t-butyl (meth)acrylate, or 2-ethylhexyl (meth)acrylate, copolymers from styrene and 1,3-butadiene, copolymers from one or more vinyl halogenides with α-olefins, such as ethylene or propylene, and/or vinyl esters, such as vinyl acetate, and/or (meth)acrylic esters of unbranched or branched alcohols having from 1 to 15 carbon atoms, such as methyl(meth) acrylate, ethyl (meth)acrylate, propyl (meth)acrylate, n-butyl (meth)acrylate, t-butyl (meth)acrylate, or 2-ethylhexyl (meth)acrylate,

More preference is given to vinyl acetate homopolymers; copolymers of vinyl acetate with from 1 to 40% by weight of ethylene; copolymers of vinyl acetate with from 1 to 40% by weight of ethylene and from 1 to 50% by weight of one or more further comonomers from the group comprising vinyl esters having from 1 to 12 carbon atoms in the carboxylic acid radical, e.g. vinyl propionate, vinyl laurate, vinyl esters of alpha-branched carboxylic acids having from 9 to 13 carbon atoms, e.g. VeoVa9R, VeoVa10R, VeoVa11R; copolymers of vinyl acetate, from 1 to 40% by weight of ethylene and preferably from 1 to 60% by weight of acrylic esters of unbranched or branched alcohols having from 1 to 15 carbon atoms, in particular n-butyl acrylate or 2-ethylhexyl acrylate; and copolymers comprising from 30 to 75% by weight of vinyl acetate, from 1 to 30% by weight of vinyl laurate or vinyl esters of an alpha-branched carboxylic acid having from 9 to 11 carbon atoms, and also from 1 to 30% by weight of acrylic esters of unbranched or branched alcohols having from 1 to 1 carbon atoms, in particular n-butyl acrylate or 2-ethylhexyl acrylate, which may additionally contain from 1 to 40% by weight of ethylene; copolymers comprising vinyl acetate, from 1 to 40% by weight of ethylene and from 1 to 60% by weight of vinyl chloride; copolymers comprising from 30 to 75% by weight of vinyl chloridee, from 1 to 30% by weight of vinyl laurate or vinyl esters of an alpha-branched carboxylic acid having from 9 to 11 carbon atoms, and also from 1 to 40% by weight of ethylene; where the polymers can additionally contain the above-mentioned auxiliary monomers in the amounts indicated and the figures in % by weight in each case add up to 100% by weight.

More preference is also given to (meth)acrylic ester polymers such as copolymers of n-butyl acrylate or 2-ethylhexyl acrylate or copolymers of methyl methacrylate with n-butyl acrylate and/or 2-ethylhexyl acrylate and, if appropriate, ethylene; styrene-acrylic ester copolymers comprising one or more monomers from the group consisting of methyl acrylate, ethyl acrylate, propyl acrylate, n-butyl acrylate, 2-ethylhexyl acrylate; vinyl acetate-acrylic ester copolymers comprising one or more monomers from the group consisting of methyl acrylate, ethyl acrylate, propyl acrylate, n-butyl acrylate, 2-ethylhexyl acrylate and, if appropriate, ethylene; styrene-1,3-butadiene copolymers; vinyl halogenide polymers such as copolymers of vinyl chloride and ethylene; where the polymers can additionally contain the abovementioned auxiliary monomers in the amounts indicated and the figures in % by weight in each case add up to 100% by weight.

Most preference is given to vinyl acetate homopolymers; copolymers of vinyl acetate with from 1 to 40% by weight of ethylene; copolymers of vinyl acetate with from 1 to 40% by weight of ethylene and from 1 to 50% by weight of one or more further comonomers from the group comprising vinyl esters having from 1 to 12 carbon atoms in the carboxylic acid radical, e.g. vinyl propionate, vinyl laurate, vinyl esters of alpha-branched carboxylic acids having from 9 to 13 carbon atoms, e.g. VeoVa9R, VeoVa10R, VeoVa11R; where the polymers can additionally contain the above-mentioned auxiliary monomers in the amounts indicated and the figures in % by weight in each case add up to 100% by weight..

In one embodiment, it is preferred that the term polymers means a blend of two or more polymers selected from the group comprising vinyl ester homopolymers, copolymers from one or more vinyl esters with ethylene, copolymers from vinyl acetate with ethylene and one or more further vinyl esters, such as vinyl esters of α-branched monocarboxylic acids having from 9 to 13 carbon atoms, and/or combinations thereof. Preferred blend comprise two or more polymers selected from the group comprising vinyl acetate homopolymers, copolymers from vinyl acetate with ethylene, copolymers from vinyl acetate with ethylene and one or more further vinyl esters, such as vinyl laurate, VeoVa9R or VeoVa10R (trade names of Shell), and/or combinations thereof.

In case of polymer blends it is preferred that the polymers present in the form of their water-redispersible polymer powders or as aqueous polymer dispersions comprise at least one polymer with a relative low Tg of -30 °C until +20 °C, preferably -20 °C until +20 °C, and at least one polymer with a relative high Tg of +30 °C until +60 °C.

The application of such blends improves the mechanical properties of the final products., e.g. the bioplastic materials.

The polymers have generally an average molecular weight of more than 500 g/mol, preferably more than 1000 g/mol.

The monomers and the proportions by weight of the comonomers are chosen so that, in general, a glass transition temperature Tg of from -50°C to +50°C, preferably from -30°C to +40°C, results. The glass transition temperature Tg of the polymers can be determined in a known way by means of differential scanning calorimetry (DSC). The Tg can also be calculated approximately beforehand by means of the Fox equation. According to Fox T. G., Bull. Am. Physics Soc. 1, 3, page 123 (1956):1/Tg = x1/Tg1 + x2/Tg2 + ... + xn/Tgn, where xn is the mass fraction (% by weight/100) of the monomer n and Tgn is the glass transition temperature in Kelvin of the homopolymer of the monomer n. Tg values for homopolymers are given in Polymer Handbook 2nd Edition, J. Wiley & Sons, New York (1975).

The polymers are prepared in a manner known per se, preferably in aqueous medium, for usually by the suspension polymerization process or preferably by the emulsion polymerization process, as described in DE-A 102006007282 for example. The dispersions contain preferably protective colloids in amounts of 1 to 20 weight percent, based on the total weight of the monomers. Preferred protective colloids are polyvinyl alcohols. To prepare polymers in form of water-redispersible polymer powders, the resultant polymers in form of aqueous dispersions are dried, preferably after addition of drying assistants, such as polyvinyl alcohol. The method of drying may be spray drying, freeze drying, or coagulation of the dispersion followed by fluidized-bed drying. Spray drying is preferred. The polymers in form of water-redispersible powders contain protective colloids in amounts of preferably 3 to 30 weight percent, based on the total weight of the polymer components.

The polymers **are** stabilized with protective colloid. Suitable protective colloids are for instance polyvinyl alcohols, polyvinyl acetals, polyvinylpyrrolidones, celluloses and their derivatives, such as carboxymethyl, methyl, hydroxyethyl and hydroxypropyl derivatives, poly(meth)acrylic acid, copolymers of (meth)acrylates with carboxy-functional comonomer units, poly(meth)acrylamide, polyvinylsulfonic acids and their copolymers, melamineformaldehydesulfonates, naphthaleneformaldehydesulfonates, styrene/maleic acid and vinyl ether/maleic acid copolymers, starch and dextrins. The proportion of protective colloid is in general from 1 to 30% by weight, preferably from 1 to 20% by weight and most preferably 3 to 20% by weight, based on the weight of the polymer.

Partly hydrolyzed polyvinyl alcohols having a degree of hydrolysis of from 80 to 95 mol% and a Höppler viscosity, in 4% strength aqueous solution, of from 1 to 30 mPa·s (method according to Höppler at 20°C, DIN 53015) are preferred. Partly hydrolyzed, hydrophobically modified polyvinyl alcohols having a degree of hydrolysis of from 80 to 95 mol% and a Höppler viscosity, in 4% strength aqueous solution, of from 1 to 30 mPa·s, are also preferred. Examples of these are partly hydrolyzed copolymers of vinyl acetate with hydrophobic comonomers, such as isopropenyl acetate, vinyl pivalate, vinyl ethylhexanoate, vinyl esters of saturated alpha-branched monocarboxylic acids having 5 or 9 to 11 carbon atoms, dialkyl maleates and dialkyl fumarates, such as diisopropyl maleate and diisopropyl fumarate, vinyl chloride, vinyl alkyl ethers, such as vinyl butyl ether, olefins, such as ethene and decene. The proportion of the hydrophobic units is preferably from 0.1 to 10% by weight, based on the total weight of the partly hydrolyzed polyvinyl alcohol. It is also possible to use mixtures of said polyvinyl alcohols.

Further preferred polyvinyl alcohols are partly hydrolyzed polyvinyl alcohols which have been rendered hydrophobic and are obtained by polymer-analogous reaction, for example acetalation of the vinyl alcohol units with C1- to C4-aldehydes, such as butyraldehyde. The proportion of the hydrophobic units is preferably from 0.1 to 10% by weight, based on the total weight of the partly hydrolyzed polyvinyl acetate. The degree of hydrolysis of from 80 to 95 mol%, preferably from 85 to 94 mol%, and the Höppler viscosity (DIN 53015, method according to Höppler, 4% strength aqueous solution) is from 1 to 30 mPa·s, preferably from 2 to 25 mPa·s.

Most preferred are polyvinyl alcohols having a degree of hydrolysis of from 85 to 94 mol% and a Höppler viscosity, in 4% strength aqueous solution, of from 3 to 15 mPa·s (method according to Höppler at 20°C, DIN 53015). Said protective colloids are obtainable by means of processes known to the person skilled in the art.

The protective colloids have generally an average molecular weight of more than 500 g/mol, preferably more than 1000 g/mol.

The polymers are applied in form of water-redispersible powders stabilized by one or more protective colloids. Polymers in form of powder are more storage stable and do not require the addition of preservatives, such as biozides, in contrast to respective dispersions. Such preservatives might be undesireable in some application products of the case composition. Polymer powders are also advantageous from a procedural point of view, since polymers and water are charged independently from each other and their amounts can be adjusted as required in each special case.

### Flour

The term "flour" concerns generally a composition having protein-containing and starch-containing fractions originating from one and the same vegetable source, wherein the protein-containing fraction and the starch-containing fraction have not been separated from one another. Typical proteins present in the flours are globulins, albumins, glutenins, secalins, prolamins, glutelins. Other components originating from the vegetable source may be present likewise, such as cell wall or non-starch polysaccharides, fibres, lipids and ash. The flour may be subjected to any treatment, such as an enzymatic treatment, but its treated components are jointly introduced. The flour can be used entirely, without generating waste products. The energy consumption is reduced considerably.

Preferably, at least 80% of, more preferably at least 90% of, most preferably all starch used in the process is provided for by the flour.

It is preferred that the term "flour" does not encompass meal, as sometimes confusingly considered interchangeably in the art. In terms of processing, flour differs from meal in that it requires additional steps to obtain flour. Meal is simply milled grain in some cases submitted to simple fractionation, while flour requires additional sieving and/or a higher degree of bolting (cloth or drum sifting), refinement or extraction rate. As a result, flour chemically differs from meal, sometimes confusingly referred to as "whole-grain flour," in that it contains reduced amounts of ash, germ, bran and fiber.

It is preferred that flour contains less than 1.2 wt% of ash, preferably less than 1.0 wt% of ash, more preferably at most 0.85 wt% of ash, based on the total weight of flour. It is preferred that flour contains less than 0.5 wt% of germ, based on the total weight of flour. It is preferred that flour contains less than 1 wt% of bran, based on the total weight of flour. It is preferred that flour contains less than 1 wt% of fibre, based on the total weight of flour, more preferably less then 0.75 wt% fibre. In the process of the present invention it is especially preferred that the flour comprises a protein content of 5 - 30 wt%, 0.05-5 wt% fatty acid and/or lipid content and 60-95 wt% carbohydrate content (including e.g. starch, sugars and non-starch polysaccharides such as pentosans), and preferably 0.1 - 5 wt% ash and minerals, all based on dry matter.

Typical water contents of flours are less than 15 wt% and, in case of predried flours preferably the water contents is lower than 0,01 wt%, in case of not predried flours the water content is preferably 9 to 15 wt%, based on the total weight of the flour.

It is preferred that the flour contains 60-95 wt%, based on the total mass of flour, carbohydrates, such as starch, sugars or non-starch polysaccharides, like pentosans, having generally an average molecular weight of more than 500 g/mol, preferably more than 1000 g/mol.

It is preferred that the flour is derived from seeds, tubers, roots, grains or grasses. More extensibly, flour may be derived from seeds, legumes, nuts, and grains, such as beans, kidney beans, soybeans, lentils, (yellow, green, wrinkled) pea, chickpea, wheat, buckwheat, triticale, sorghum, amaranth grain, corn, sago, barley, oat and rice. Additionally, flour may be derived from grasses, roots or tubers, such as potatoes, sweet potato, quinoa, arrow root and cassava. The flour may be derived from amylose-rich (amylo) or amylopectin-rich (waxy) plant resources. Flour preferably comprises cereal flour, more preferably rye flour and/or wheat flour, preferably in predominant amounts. Most preferred are rye flour and/or wheat flour. Chemically modified flour or flour derivatives may also be used. Preferably flours are used which are not or slightly chemically modified, preferably phosphorylated. In one embodiment, flour is applied being chemically modified having a degree of modification of less than 10%, more preferably less than 5%, wherein the percentage is based on the maximum degree of substitution for that type of modification. In one embodiment, it is preferred to use a flour containing pentosans and/or hemicellulose. It is especially preferred to use a flour containing pentosans.

### Biopolymers

The biopolymers may be directly made from renewable resources or can be made from oil-based resources. Desirably, the biopolymers are homopolymers, block copolymers, graft copolymers or random copolymers. Preferably the biopolymers comprise one or more repeat units containing hydrolysable linkages, or combinations thereof, such as one or more units selected from the group comprising glycolic acid (e.g., the dimer of glycolic acid, glycolide), lactic acid (e.g., the dimer of lactic acid, lactide), hydroxy alkanoic acids such as hydroxybutyric acid and hydroxyvaleric acid, caprolactone, p-dioxanone, trimethylene carbonate, butylene succinate, butylene adipate, monosaccharides, such as hexoses such as glucose, fructose, and galactose, as well as pentoses such as ribose and deoxyribose, dicarboxylic acid anhydrides, such as anhydrides of sebacic acid and hexadecandioic acid, enantiomers thereof, such as L-lactic acid or D-lactic acid, esters of saccharides, such as cellulose acetate, and combinations thereof.

Typically, the biopolymers comprise polymers selected from the group consisting of DL-polylactide (DLPLA), D-polylactide (DPLA), L-polylactide (LPLA), polyglycolide (PGA), poly(DL-lactide-co-glycolide) (PGLA), poly(ethylene glycol-co-lactide), polycaprolactone (PCL), poly(L-lactide-co-caprolactone-co-glycolide), poly(dioxanone) (PDO), poly(trimethylene carbonate), polyglyconate (e.g., a copolymer of glycolide and trimethylene carbonate), polyhydroxyalkanoates (PHA), polyhydroxybutyrate (PHB), polyhydroxybutyrate-co-hydroxyvalerate (PHBV), polyhydroxyvalerate (PHV), polysaccharides (e.g., homopolysaccharides and heteropolysaccharides), modified polysaccharides such as cellulose acetate and chitosan, aliphatic and aromatic copolyesters, poly(1,4-butylene succinate) (PBS), poly(1,4-butylene adipate) (PBA), (poly butadiene adipate co-terephthalate polymer (PBAT) (such as Ecoflex; tradename of BASF), poly(butylene succinate adipate) (PBSA), polyanhydrides such as poly(sebacic acid-co-hexadecandioic acid anhydride) (poly(SA-HDA anhydride), polyorthoesters (POE), plasticized starch with poly(caprolactone), starch-based aliphatic polyesters, polyesteramides (PEA). Also, combinations (e.g., blends) are comprised, as are copolymers comprising the above.

In one embodiment, the biopolymers preferably comprise one or more biologically produced polymers, preferably polymers selected from the group comprising bacterial polyester polyhydroxyalkanoate (PHA), such as homopolymers and copolymers of 3-hydroxybutyric acid and 3-hydroxyvaleric acid, and poly(lactic acid) [PLA], and combinations thereof.

Preferably, the biopolymers comprise a lactic acid (e.g., lactide) or hydroxybutyrate repeat unit. More preferably the biopolymers comprise polylactide (PLA) and/or copoly lactic acid/glycolic acid (PLGA). These are superior in biocompatibility and biodegradability. PLA is particularly desirable because PLA can be prepared having a wide range of molecular weight, hardness, crystallinity, and thermal properties. PLA can exist as two optically active forms: L-PLA and D-PLA. PLA can have any suitable D/L ratio, for example the ratio of the D- to L-enantiomer can be 100:0, 85:15, 75:25, 65:35, or 50:50, or a range between any two of these particular ratios. The ratio of D/L plays an important role in determining the thermal and physical properties of the PLA. PLA having a high L-enantiomer content (e.g., greater than about 90%) typically is more crystalline and has a longer degradation time, whereas PLA having a high D-enantiomer content (e.g., >15%) is more amorphous and has a shorter degradation time.

In one embodiment, it is preferred that the biopolymers comprise a blend comprising, and preferably in combination with polyester polyhydroxyalkanoate (PHA), poly(1,4-butylene succinate) (PBS), poly(1,4-butylene adipate) (PHB), (poly butadiene adipate co-terephthalate polymer (PBAT), poly(caprolactone), esters of saccharides, such as cellulose acetate, and/or combinations thereof. In such blends PLA is preferably contained in predominant amounts.

The biopolymers have generally an average molecular weight of more than 500 g/mol, preferably more than 1000 g/mol.

It is preferred that the biopolymers contain little water, such as less than 1 wt% of water, preferably less than 0.5 wt% of water, based on the total amount of the biopolymers. The water may add to the stability of the biopolymers against degradation in the course of processing.

### Plasticizers; water

Water which may be present in the inventive compositions serves as plasticizer in in thermomechanical processing. It is preferred that 0.01-15% and more preferably 0.01-10% water is contained in the compositions according to the invention, based on the total weight of the base composition or the multi-component compositions respectively. Preferably a part of the water, preferably a predominant part of the water is provided for by the water containing flour.

In the context of the invention, a plasticizer is understood to mean compounds that aids in formability or shapeability (not to be confused for elasticity) of the mixture of flour and polymer, principally by lowering the glass temperature. Examples of suitable plasticizers are polyfunctional alcohols such as ethylene glycol, polyethylene glycol [PEG], propylene glycol, glycerol, glycol, 1,3-butane-diol, diglyceride, and the respective ethers etc, but also compounds such as dimethyl sulfoxide, dimethyl formamide, dimethyl urea, dimethyl acetamide, low molecular mass polyols or their derivatives, sugars, such as maltose, sucrose and/or glucose, maltotriose, maltooligosaccharides, and maltrodextrins. Another group of plasticizers consists of compounds such as monoacetin, diacetin, triacetin, citric acid esters such as acetyl tributyl citrate, acetyl triethyl citrate, tributyl citrate or triethyl citrate and oligimeric lactic acid (OLA).

### Fillers and additives

The compositions may be supplemented with fillers, preferably of natural origin, such as inorganic fillers, organic fillers. Examples of inorganic fillers include talc (hydrous magnesium silicate), titanium dioxide, calcium carbonate, sand, chalk, limestone, diatomaceous earth, silicates, boron nitride, mica, glass, quartz, silica, such as nanosilica or hydrophobic silica, nanoclays and ceramics. Preferred organic fillers are organic biodegradable fillers, such as wood flour, fibers, like pecan fibers. Nanoclays can be used to improve properties such as mechanical properties and barrier properties. Examples of nanoclays are selected from a group consisting of montmorillonite, smectite, hectorite, and mixtures thereof.

The compositions may further comprise additives known in the art, such as antioxidants, lubricants, pigments, odorants, flame-proofing agents, melt flow accelarators, fungicides, herbicides, fertilizers and opacifiers, compounds with rodent-repellent effects, and waxes.

### Formulation for the base compositions

A typical formulation for the base composition contains 1% to 90% by weight, preferably 2.5% to 60% by weight, even more preferably 2.5% to 50% by weight and most preferably 5% to 30% by weight of one or more polymers in the form of their water-redispersible polymer powders or as aqueous polymer dispersions, 10% to 99% by weight, preferably 40% to 97.5% by weight, even more preferably 50% to 97.5% by weight and most preferably 70% to 95% by weight of one or more flours, 0% to 50% by weight, preferably 2.5% to 35% by weight and most preferably 5% to 30% by weight of one or more plasticizers, 0% to 50% by weight, preferably 0% to 30% by weight and most preferably 0% to 20% by weight of one or more fillers, 0% to 5% by weight and preferably 0.1% to 5% by weight of each additive applied, based on the total amount of each formulation, and whereby the proportions in case summing to 100% by weight. Water is contained in the base compositions in amounts of preferably 1.3-40%, 5 - 40 wt%, more preferably 8 - 35 wt%, even more preferably 10 - 30 wt%, most preferably up to 20 % of, particularly less than 16 %, calculated on the total weight of each formulation.

In one embodiment it is preferred that the total amount of plasticizer given above includes the water already present in the components of the respective base composition, such as in flour for instance.

In another embodiment, either individually or in combination with the preceding paragraph, it is preferred to add at least one plasticizer (other than water), irrespective of the amount of water employed in the composition to be extruded. At the process conditions of the invention, water may not be sufficient guarantee to provide processable compositions leading to products at a reproducible standard; in such cases it may be preferred to add plasticizers to render the conditions more uniform.

### Formulation for the thermoplastic processable multi-component compositions

A typical formulation for the multi-component compositions contains 0.5% to 50% by weight, preferably 1% to 40% by weight and most preferably 1% to 30% by weight of one or more polymers in the form of their water-redispersible polymer powders or as aqueous polymer dispersions, 1% to 95% by weight, preferably 1% to 80% by weight, most preferably 15% to 60% by weight of one or more flours, 0.001% to 99% by weight, preferably 5% to 95% by weight, most preferably 20% to 60% by weight of one or more biopolymers, 0% to 50% by weight, preferably 2.5% to 35% by weight and most preferably 5% to 30% by weight of one or more plasticizers, 0% to 50% by weight, preferably 0% to 30% by weight and most preferably 0% to 20% by weight of one or more fillers, 0% to 5% by weight and preferably 0.1 % to 5% by weight of each additive applied, based on the total amount of each formulation, and whereby the proportions in case summing to 100% by weight. Water is contained in the base compositions in amounts of preferably 1.3-40%, 5 - 40 wt%, more preferably 8 - 35 wt%, even more preferably 10 - 30 wt%, most preferably up to 20 % of, particularly less than 16 %, calculated on the total weight of each formulation. The multi-component compositions preferably contains polymers, comprising polymers in their form of water-redispersible polymer powders or as aqueous polymer dispersions and biopolymers, and flour in a dry weight ratio ranging from 1:5 to 5:1, preferably 1:5 to 4:1, more preferably 1:5 to 3:1, even more preferably between 1:4 to 2:1.

In case of injection moulding of the multi-component compositions 40% to 80% by weight one or more flours are preferred. For blow film extrusion the multi-component compositions containing 20% to 50% by weight one or more flours are preferred.

In one embodiment it is preferred that the total amount of plasticizer given above includes the water already present in the components of the respective base composition, such as in flour for instance.

In another embodiment, either individually or in combination with the preceding paragraph, it is preferred to add at least one plasticizer (other than water), irrespective of the amount of water employed in the composition to be extruded. At the process conditions of the invention, water may not be sufficient guarantee to provide processable compositions leading to products at a reproducible standard; in such cases it may be preferred to add plasticizers to render the conditions more uniform.

The base compositions as well as the multi-component compositions may additionally contain one or more polymer resins. Polymer resins are obtainable by radically initiated polymerization from one or more ethylenically unsaturated monomers selected from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides. Preferred polymer resins are polyethylene (PE), polypropylene (PP), polyethylene teraphthalate (PET), Polybutylene terephthalate, polyesters, polyamides, like polyamide 11 (PA 11), or polyacrylates. Resins may be oil based as well as renewable based. Polymer resins differ from water-redispersible polymer powders or polymer dispersions in that they are not stabilized by protective colloids and/or emulgators; e.g. solid polymer resins are not completely redispersible in water or do not give stable aqueous polymer dispersions. Polymer resins are applied in amounts of preferably 0 to 10% by weight and more preferably 0 to 5% by weight, calculated on the total weight of the base composition or the multi-component composition. Most preferably, the base compositions and/or the multi-component compositions do not contain polymer resins, because of their poorer biodegradability. But in some cases it might be advantageous to apply polymer resins in order to decrease or retard biodegradation.

### Preparation of the thermoplastic processable compositions (base compositions) and the thermoplastic processable multi-component compositions as well as their application in thermomechanical processing

The base compositions or the multi-component composition as defined in the claims are each obtainable by mixing or blending their respective constituents, e.g. by mixing or blending one or more flours, one or more polymers in the form of aqueous polymer dispersions or in the form of water-redispersible polymer powders, and optionally plasticizers, optionally additives and optionally fillers and in case of multi-component compositions one or more biopolymers. The starch contained in the flour or the flour as a whole provided to the mixing is preferably not destructured, destructurized or rendered thermoplastic previously. Preferably, the optional components, particularly the plasticizers, are added in a separate or subsequent step, as described below.

Mixing or blending might be done with conventional equipment, such as blenders, mixers, and/or preconditioners. Such a mixing operation is preferably performed in a well controlled moisture atmosphere, preferably in a way that allows keeping moisture at the initial levels. The mixing temperature is preferably maintained at temperatures below the gelatinization temperature at 0 °C to 60 °C, or more preferably between 5 to 50 °C, conveniently at room temperature.

The compositions are typically obtained in solid form, preferably in form of powders, agglomerated powders, pellets, flakes, granulates or in some cases dispersions.

Dried base compositions or dried multi-component compositions are obtainable by drying the aforementioned blends, preferably at temperatures from 20 to 80°C, more preferably 20-70C. Dried base compositions or dried multi-component compositions have a water content from 0 to 20%, preferably 1,3-20%, based on the total weight of the respective composition. This means dried compositions comprise completely or partly dried compositions. Typical drying methods might be applied such as infrared drying, drum drying, spray, vacuum, (natural) air drying, convection drying, low-pressure drying, freeze drying, microwave drying or direct degassing techniques during processing such as extrusion.

Alternatively, the multi-component compositions are obtainable by mixing or blending one or more biopolymers to the base compositions, preferably to the dried base compositions.

The thus obtained, optionally dried, base compositions or multi-component compositions are processable according to the well-known thermomechanical processing methods comprising extrusion, kneading, injection moulding, compression moulding, blow moulding, thermoforming and heat welding, preferably comprising extrusion, injection moulding, blow moulding, compression moulding and thermoforming. The compositions are thermoplastically modified, preferably by means of extrusion compounding or blending, like multiple screw extrusion. This step is preferably run at a temperature varying from about 100 °C to about 180 °C, preferably 110 to 165 °C, depending on the zones of the mixing, and typically involves a time interval extending from about 20 s to about 5 minutes in most cases or more preferably 30 to 180 s. Optional constituents of the compositions, particularly the one or more plasticizers - all or at least part thereof - can also be included in the extruder.

Thus in a further aspect, the invention thus pertains to bioplastic materials obtained by thermomechanical processing methods of base compositions or multi-component compositions.

The thermomechanically processed base compositions or the thermomechanically processed multi-component compositions (both called bioplastic materials) are subsequently preferably allowed to cool down, using for instance air, a water or ice-water bath or ice-cold air current and eventually dried to the required humidity content, preferably between 0-10%, more preferably 1.3 to 10 wt% or even more preferred between 1.5 to 9.5%, or still more preferably between 2 to 9%, calculated on total weight of the bioplastic material. Packaging and storage of the bioplastic materials are done in such a way that the required humidity level is preserved, if required. Alternatively, the bioplastic materials can also be directly applied in further steps without any preliminary packaging or storage.

Numerous alternatives are applicable for performing the thermomechanical processing methods. In one embodiment the bioplastic materials can be transformed into granulates, such as pellets or balls or flakes or filaments. Typical ways are using (under-water) granulators, pelletizing systems or (fibre) spinning. Such granulates might be applied in customary processes for processing of thermoplastic, such as moulding or extrusion. In another embodiment the bioplastic materials are moulded or extruded to give the final products directly, e.g. without isolation of intermediate products such as granulates.

In a further aspect, the invention thus pertains to a process for manufacturing mouldings or shaped articles, characterized in that the bioplastic material of the invention is shaped or moulded. Another aspect of the instant invention is a process for manufacturing mouldings or shaped articles, characterized in that the bioplastic material of the invention is granulated and subsequently shaped or moulded.

Mouldings or shaped articles can be prepared using the tools customary for the processing of thermoplastics, by means of extrusion, extrusion blow moulding, foam extrusion, injection moulding, calendaring of thermoforming.

The present bioplastic materials are less appropriate for cold moulding, i.e. moulding at temperature lower than the glass transition of the composition. In practice the shaping is performed at temperatures of at least about 70 °C, more preferably at least 80 °C, in particular in the case of thermoforming, more preferably at least 100 °C in the case of other shaping methods such as injection or blow moulding. It is thus preferred to process the bioplastic materials (preferably by thermoforming or moulding) at a temperature between 70 -200 °C, more preferably at least 80 °C, most preferably 100 °C to 200 °C, preferably at least 110 °C.

In shaping or moulding the bioplastic materials it is preferred that the water content is reduced to less than 10 wt%, based on the total mass of the bioplastic material, to prevent the polymers from fast deterioration and maintain tensible bars at good levels. However, still it is preferred to incorporate water while moulding or shaping, preferably at least 1.3, more preferably at least 2 % of the total composition. It may require additional water or drying to reach acceptable water levels.

However, for the preparation of foamed articles it is preferred to apply multi-component compositions or preferably base-compositions which have a water-content of from 5 - 40 wt%, preferably 10 - 30 wt% calculated on the total weight of each composition; e.g. for the preparation of foamed shaped articles it is not preferred to use dried the multi-component compositions or dried base-compositions. Water might serve as blowing agent in such a process.

Thus, in a further aspect, the invention thus pertains to foamed articles, obtainable by foam extrusion of the multi-component compositions or the base-compositions. Examples of foamed articles are packaging materials, such as loose fill, food containers, expanded polystyrene (EPS) type packaging, or insulation foam products.

A typical process of making foamed articles are extrusion (cooking) processes. A preferred extruder is a twin screw. Therein, heat and shear causes the flour to gelatinize or to melt. Water, released as steam at the die of the extruder, is the preferred and primary blowing agent. Complete expansion or density reduction takes place immediately after the product exits the extruder.

Multi-component compositions are particularly suitable for the preparation of mouldings.

Multi-component compositions containing one or more flours, one or more polymers in the form of water-redispersible polymer powders or aqueous polymer dispersion and one biopolymers, such as PLA, PHA or PCL, are particularly suitable for injection moulding, extrusion or thermoforming. These methods are preferred for the preparation of shaped products, such as plant pots, containers or clips.

Multi-component compositions containing one or more flours, one or more polymers in the form of water-redispersible polymer powders or aqueous polymer dispersion and two or more biopolymers, such as PLA and PBS, or PLA and PCL, or PLA and PHA, or PLA and PBAT, are particularly suitable for blow-film extrusion. Blow-film extrusions are particularly suitable for the preparation of foils.

Generally, the bioplastic materials according to the invention are especially useful in providing short use applications, such as packaging, containers and packaging and/or agricultural applications, e.g. cultivation articles, e.g. flower pots. Short term use means that the respective products are used for a short time and are disposed afterwards. Pollution is of particular concern in such applications.

The bioplastic materials from multi-component compositions are typically suitable for the production of products such as catering products, organic waste bags, biodegradable mulch foils, biodegradable foils for diapers, diaper ingredients, foil packaging, vegetable packaging, tyre components.

The bioplastic materials according to the invention are characterized by unexpected homogeneous structure, although the components for their preparation have very different polarity which are for usually only badly or even not at all miscible; for instance flour is very polar, whereas the biopolymers as well as the polymers from ethylenically unsaturated monomers are for usually very apolar. Nevertheless, the instant compositions make even co-continuous bioplastic materials available, e.g. bioplastic materials in which the its different constituents are distributed homogenously. These effects are affected by the instant application of the polymers in the form of their water-redispersible polymer powders or as aqueous polymer dispersions which act as compatibilizer for the different, intrinsically incompatible components. Polymer resins or polyvinyl alcohol or their simple mixtures do not furnish this effect. Furthermore, too high contents of polyvinyl alcohol deteriorates the effects and the properties achieved according to the instant approach. The homogeneity or the bioplastic materials may be characterized by the average diameter of the distinguishable phases, e.g. hydrophilic and hydrophobic phases. Preferably the average diameter of the distinguishable phases is smaller than 10 micrometer, more preferably smaller than 1 micrometer (determined with scanning electron microscope). The average diameter of the distinguishable phases is preferably between 100 nanometer and 10 micrometer, more preferably between 100 nanometer and 1 micrometer.

The bioplastic materials, such as mouldings or shaped articles or foils of the instant invention show prominent advantageous properties required in the instant field of technology, such as very high mechanical strength, resilience, reduced water sensitivity, and little swelling in water and are rottable. "Rottable" is preferably to be understood as meaning that the requirement of standard EN 13432 is fulfilled. This means that the products are biodegradable which is a prerequisite for the disposal of waste on biological pathways. These effects are attributed to the homogenous structure of the instant products and, thus, to the application of the instant water-redispersible polymer powders or aqueous polymer dispersions.

Biodegradability of polymers or compositions can be defined as the physical and/or chemical degradation at the molecular level of the substances by the action of environmental factors, particularly the enzymes stemming from the metabolic, processes of microorganisms. With "biodegradable" it is preferably understood that the base compositions, the multicomponent compositions or the thermomechanically processed products, e.g. the bioplastic products satisfy the American Society for Testing and Materials ASTM-6400-99, ISO14855 (only for biodegradation), DIN V49000 or more preferably the CEN EN13432. The ASTM, CEN and DIN standards specify the criteria for biodegradation, disintegration and eco-toxicity for a plastic to be called compostable. It is preferred that the composition complies with at least one, more preferably at least two, most preferably at least three, especially with all four of the above standards. Biodegradability is typically determined by measuring the amount of CO₂ produced over a certain time period by the biodegrading plastic. ASTM, ISO and DIN standards require 60% biodegradation within 180 days. The EN13432 standard requires 90% biodegradation.

### EXAMPLES

### Test methods:

The following methods were applied for the determination of the following parameters: E-modulus, strain, elongation and tensile strength each according to ISO3167 type 527; tear strength according to ISO 6383/2; impact strength according to DIN EN ISO 179/1eU (unnotched). Samples were conditioned before measurements at 20 °C and 50 % RH (in case of injection moulded products) and at 30% RH (in case of foils) for 1 week.

### Example 1: Thermoplastic base composition

A thermoplastic base composition was made with a Weber DS 48 extruder. The following formulation was applied: 12.7 parts LL2504 (polyvinyl alcohol stabilized polymer powder from vinyl acetate and ethylene), 15.2 parts LL2510 (polyvinyl alcohol stabilized polymer powder from vinyl acetate), 49.6 parts FlourPlast (tradename of Meneba), 1.9 parts melt flow accelerators, 7 parts glycerol. The melt temperature was 90-91 °C at 27 rpm.

The resulting granulate was injection moulded with an Engel ES 600/125 machine (screw 30 cm, at Tmelt = 160°C) in the shape of a tensile bar (ISO 3167 type 527). The tensile bars showed the following properties:
E-modulus 1.2 GPa; tensile strength 1.1 MPa; elongation 11%; impact strength 0.9 kJ/m².

The base composition in form of granulates could be easily injection moulded. This was not possible with a composition which differed from the above base composition in that no LL2504 was contained, because the pressure build-up was too high and the machine was blocked in this case.

### Example 2: Thermoplastic multi-component composition

### Multi-component composition A):

The granulate from Example 1 was air dried at 50°C overnight (remaining water content <0.5% water). Then the granulate was mixed with 30 wt% PLA 2002D (polylactic acid; Ingeo plastic resin type; tradename of Nature Works LCC), based on the total mass of the dried granulate from Example 1, and injection moulded with Engel ES 600/125 machine (screw 30 cm, at Tmelt = 170°C) into tensile bars. The mechanical properties of the product A) are shown in Table 1.

### Multi-component composition B):

The process for the preparation of the multi-component composition A) was repeated with the difference that the formulation for the preparation of the base composition contained additionally 5 parts water and that the melt temperature was 80-84°C at 25 rpm. The mechanical properties of the product b) are shown in Table 1.

**Table 1:**

| Product | E-modulus [GPa] | Tensile Strength [MPa] | Elongation [%] | Impact strength [kJ/m²] |
|---|---|---|---|---|
| A | 2.4 | 2.7 | 2.5 | 1.0 |
| B | 2.6 | 2.8 | 2.4 | 0.9 |

Strikingly there is no need for adding additional water to the composition to meet the flour to obtain thermoplastic processable products with good properties.

### Comparative example I - Starch vs. flour

Multi-component compositions containing flour were extruded and compared to their starch-based counterpart. The following components were applied:
PLA (polylactic acid; Ingeo plastic resin type 2002D; tradename of Nature Works LCC); LL2504 (polyvinyl alcohol stabilized polymer powder from vinyl acetate and ethylene); LL2510 (polyvinyl alcohol stabilized polymer powder from vinyl acetate);
various types of flour (all commercially available): Meneba types Emerald (wheat based), Biscuit (wheat based) and Rijn (rye based). The flours employed typically contains about 8-12 wt% of proteins, based on dry matter (method ICC105).

As a reference a potato-starch was applied (see Table 1).

Each multi-component composition contained 32 wt% of the respective flour given in Table 2 (dry matter), glycerol 4.6 wt%, LL2510 11.1 wt%, LL2504 9.3 wt% and PLA 27.5 wt%. The water content is in terms of the weight of the total composition 14.4 wt% (including water content flour).

The compositions were extruded using a Berstorff ZE 40 * 38D extruder with an underwater pelletizing system with a melt blend screw configuration. The melt zone temperature was 145°C. After granulation good quality granulates were obtained, all having smooth surface showing no inhomogeneties. In particular the Emerald and Biscuit granulates showed a colour, which closely resembled that of the starch reference.

After drying to 5.0-5.5 wt% water, the granulates were further processed by injection moulding using a DEMAG NC III K with a melt temperature of 170°C. The mechanical properties of the thus obtained moulding tensile bars were determined and summarized in Table 1. Mechanical properties were determined after conditioning the moulding tensile bars at 50 %RH and 20 °C (ISO Multipurpose Test Specimen ISO 3167 and ISO 179 unnotched impact).

Economically favourable flour showed mechanical properties that corresponded to its more expensive starch counterpart. Moreover, the mechanical properties of the end-product may be fine-tuned with the properly selected flour.

**Table 1:**

| | E-modulus [MPa] | Tensile Strength [MPa] | Strain [%] | Impact strength [kJ/m²] |
|---|---|---|---|---|
| Starch | 2355 | 31.5 | 2.0 | n.d.^{a)} |
| Emerald [wheat flour] | 2221 | 29.1 | 2.1 | 11 |
| Biscuit [wheat flour] | 2203 | 30.3 | 2.8 | 12 |
| Rijn [rye flour] | 2232 | 30.2 | 2.9 | 9 |

| | | | | |
|---|---|---|---|---|
| a) n.d.: not determined. | | | | |

### Comparative example II - Ratio hydrophilic to hydrophobic phase; flour vs. starch

Table 2 shows the effect of increased levels of the hydrophobic polymers, such as for instance biopolymers, on mechanical properties of injection moulding products.

The following multi-component composition was applied in the same process as described in Comparative example I for the preparation of moulding tensile bars: flour type "Rijn" 16wt% (dry matter; rye flour; tradename of Meneba), glycerol 4,6 wt%, LL2510 5.6 wt%, LL2504 25 wt% and polylactic acid (PLA) 45 wt%. The water content is in terms of the total composition 14.4 wt % (including water content flour). A further difference to Comparative Example I was that the extruded granulates were dried to 2.0-2.5% water before injection moulding. The test results obtained with these moulding tensile bars are given in Table 2 (Rye flour).

The aforementioned process was repeated with a composition which contained the respective amount of starch instead of the rye flour. The test results with the starch containing moulding tensile bars are given in Table 2 (starch).

The comparison of the results achieved with the different rye flour containing compositions listed in Table 1 and Table 2 illustrates that compositions containing higher amounts of biopolymers and higher amounts of polymer powders furnish products with higher flexibility and higher E-modulus. Furthermore, Table 2 shows that the flour based product is more flexible than its starch counterpart.

**Table 2:**

| | E-modulus [MPa] | Tensile Strength [MPa] | Strain [%] | Impact strength [kJ/m²] |
|---|---|---|---|---|
| | | | | |
| Starch | 1893 | 29.3 | 5.9 | 46 |
| Rye flour | 1992 | 30.4 | 12.7 | 52 |

### Comparative example III:

Examination of the influence of the method for the preparation of multi-component compositions on the properties of the products obtained therewith.

The following formulation was applied: 35 wt% (dry matter) FlourPlast (wheat based flour from Meneba), 6 wt% glycerol, 2 wt% processing aids (i.e. stearic acid and stearate), 30 wt% polylactic acid, 12 wt% LL2510 (polyvinyl alcohol stabilized polymer powder from vinyl acetate), 15 wt% LL2504 (polyvinyl alcohol stabilized polymer powder from vinyl acetate and ethylene).

### Preparation of Granulate A:

The aforementioned formulation was subjected to the process described in Comparative Example 1 to give respective granulates; e.g. the granulates were prepared in a one step process.

### Preparation of Granulate B:

The aforementioned formulation was subjected to the process described in Example 2, alternative A; e.g. first a base composition was prepared and afterwards the PLA was added in a subsequent step to give the multi-component composition in form of granulates.

Advantageously, no demixing or phase separation occurred during the injection moulding of Granulates A and B in contrast to known granulates which do not contain polymers in form of polymer powders or polymer dispersions.

The mechanical properties of the Granulates A and B are presented in Table 3. Surprisingly, the Granulates A show even better mechanical properties than the Granulates B. It is believed that the process for the preparation of the granulates A leads to a more homogenous mixture of the different components down to the molecular level causing improved mechanical properties.

**Table 3:**

| | E-modulus [MPa] | Tensile Strength [MPa] | Strain [%] | Impact strength [kJ/m²] |
|---|---|---|---|---|
| Granulate A | 2.7 | 43.1 | 4.1 | 13.3 |
| Granulate B | 2.6 | 28.1 | 2.4 | 9.7 |

### Comparative example IV: Dispersed flour-containing film vs. homogeneous product:

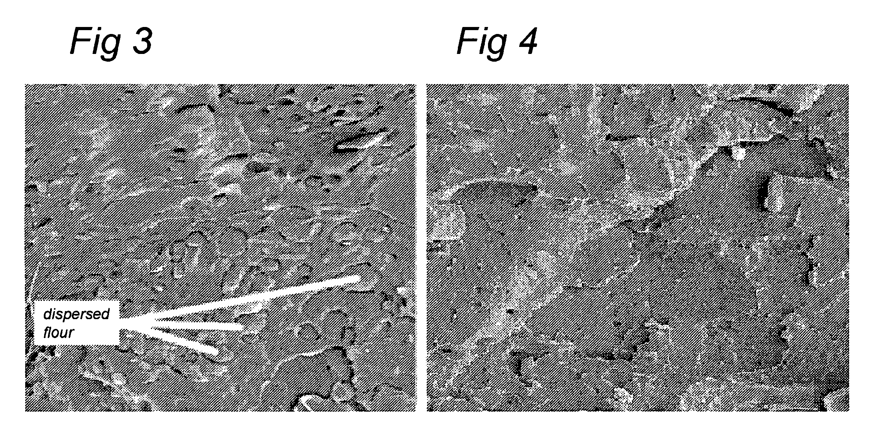

Figure 3 shows pictures recorded with SEM (scanning electron microscope) from a commercial flour-based film in line with US 7,148,272 (dispersive blend). Figure 4 shows respective pictures of a film from the Granulate A described in Comparative Example III.

Figure 4 shows a completely homogenised continuous structure where the components are blended at submicron levels in contrast to Figure 3.

### Comparative example V: Foils made from multi-component compositions

The following formulations were applied: 10.7 parts Flourplast or starch (as given in Table 4), 3.6 parts Vinnex (either LL2501 or LL2504 as given in Table 4), 1.5 parts processing aids (i.e. stearic acid and stearate), 6 parts glycerol and 30 parts Ecoflex (poly butadiene adipate co-terephthalate polymer; tradename of BASF) (all dry matter based). The water content was 4.4%, based on the total mass of each composition. These compositions were processed via extrusion compounding with a Berstorff ZE 40 * 38D extruder with an underwater pelletizing system with a melt blend screw configuration (at 225 rpm). The melt zone temperature was 160°C.

Foils were made on a standard film blowing machine with a melt zone T of 130 and a die T of around 125-130

The tear strength (expansion or machine cross-direction) values are significant higher using flour as the basis in the foil compared to starch.

**Table 4: Foils: Starch vs. flour:**

| | Expansion [N/mm] |
|---|---|
| Starch | |
| LL2501^{a)} | 23 |
| LL2504^{b)} | 24 |
| | |

| FlourPlast | |
|---|---|
| LL2501^{a)} | 32 |
| LL2504^{b)} | 29 |

| | |
|---|---|
| a) polyvinyl alcohol stabilized polymer powder from vinyl acetate and ethylene b) polyvinyl alcohol stabilized polymer powder from vinyl acetate and ethylene | |

### Comparative example biodegradability VI (Comp.Ex. VI): Biodegradability

Granulates were made by extrusion blending of the formulation described in Comparative Example III for Granulate A, i.e. product VI containing FlourPlast 34,8%, Vinnex LL 2510 14,9%, Vinnex LL 2504 14,9%, PLA 30,0%, Glycerol 5,0% and stearate 0,4%. The biodegradation of the granulates was tested according to controlled composting test as described in ISO14855.

The granulates were uniformly biodegraded (see Table 5). The biodegradation of the Comparative Example VI has nicely proceeded and after 44 days an absolute biodegradation percentage of 91.8% was observed. On a relative basis with cellulose as the suitable reference substrate a value of 83.0% was calculated. As such the 90% biodegradability criterion has been reached, and therefore fulfilled at least one of the standards from the group American Society for Testing and Materials ASTM-6400-99, ISO14855, DIN V49000 and CEN EN13432 which define biodegradability.

**Table 5: Biodegradation:**

| Test item | Carbon [%] | Net CO₂ production [mg/g test item] | Biodegradation [%] | | |
|---|---|---|---|---|---|
| | | | AVG. | STD. | REL. |
| Cellulose | 42.5 | 1725 | 110.7 | 0.3 | 100.0 |
| Comp.Ex. VI | 47.5 | 1599 | 91.8 | 11.7 | 83.0 |

| | | | | | |
|---|---|---|---|---|---|
| With AVG = average; STD = standard deviation and REL: relative biodegradation. | | | | | |

### Comparative example VIII: Foamed articles, loose-fill products

Loose-fill products were made from compositions containing RMS (rye based, 10% protein, 1,65% ash, 2% fat, 12% water; tradename of all Meneba) and LL2505 (polyvinyl alcohol stabilized polymer powder from vinyl acetate, versatic acid ester and ethylene) in amounts given in Table 6. Foaming of the compositions was performed on an Ermafa double-screw co-rotating extruder with a capacity of 500 kg/h. The Extruder was run at constant conditions and water content. As blowing agent natural water content of the flours was used with additions of 15% extra water. The foamed articles were prepared with a simple form furnishing straight products common as loose-fill.

### Determination of the Bulk Density:

Bulk density of the loose-fill products was determined by filling in a 5 liter barrel and measuring the weight of the products the barrel contains. Table shows effect of the addition of LL2505 to the bulk density of flour. A clear reduction is observed depending on Vinnex type and amounts.

### Determination of the Fines:

Fines were determined on loose-fill products made with and without LL2505 in the range of up to 20%. Fines were determined in a rotating drum with glass pearls (D=8mm) for 60 minutes. The fines were calculated on the basis of initial mass after sieving the product.

Determination of the Mechanical properties (hardness, elasticity, relaxation): Mechanical properties were determined with a TA Texture-analyser (tradename of Texturetechnologies). Loose-fill products were put in a 1 liter flask with a height of 180 mm. A pressure stamp was applied at 33% compression. The peak force (in N) was measured after first compression. The elasticity was calculated as the volumetric relaxation after the first and second compression step. The relaxation was after a second compression (to 33%) calculated as the ration of energy needed in the second devided by the first step (area peak 2 / area peak 1). The relaxation is a measure telling us something about the resilience of the products.

**Table 6: Loose Fill:**

| LL2505 [%]^{a)} | Bulk density [g/l] | Fines [%] | Elasticity | Relaxation |
|---|---|---|---|---|
| 0 | 53 | 6,4 | 0,51 | 0,41 |
| 5 | 45 | 0,4 | 0,57 | 0,51 |
| 10 | 33 | 0,4 | 0,56 | 0,54 |
| 20 | 26 | 0,4 | 0,6 | 0,56 |

| | | | | |
|---|---|---|---|---|
| a) wt% based on the total amount of LL2505 and RMS; RMS was added in such amounts that the parts of LL2505 and RMS sum up to 100. | | | | |

## Claims

1. Thermoplastic processable compositions (base compositions) comprising one or more flours, one or more polymers, optionally plasticizers, optionally fillers and optionally additives, **characterized in that** at least one of the polymers is stabilized with protective colloid and present in the form of its water-redispersible polymer powder or as aqueous polymer dispersion and based on one or more ethylenically unsaturated monomers from the group comprising vinyl esters of linear or branched alkylcarboxylic acids with 1 to 15 C atoms, methacrylate esters and acrylate esters with alcohols with 1 to 15 C atoms, vinylaromatics, olefins, dienes or vinyl halides, whereby the compositions contain less than 12% by weight of polyvinyl alcohol, based on the total amount of polymeric components of the composition.

2. Thermoplastic processable compositions according to claim 1 comprising two or more polymers (multi-component compositions), **characterized in that** at least one of the polymers is a biopolymer, .

3. The base compositions or multi-component compositions according to claim 1 or 2, **characterized in that** the polymers stabilized with protective colloid and present in the form of their water-redispersible polymer powders or as aqueous polymer dispersions are homopolymers or copolymers which contain one or more monomers from the group vinyl acetate, vinyl esters of α-branched monocarboxylic acids having from 9 to 13 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene

4. The base compositions or multi-component compositions according to claim 1 to 3, **characterized in that** flour concerns a composition having protein-containing and starch-containing fractions originating from one and the same vegetable source, wherein the protein-containing fraction and the starch-containing fraction have not been separated from one another.

5. The base compositions or multi-component compositions according to claim 1 to 4, **characterized in that** at least 80 wt% of the starch contained in the base compositions or the multi-component compositions is provided for by the flour.

6. The base compositions or multi-component compositions according to claim 1 to 5, **characterized in that** the flour is derived from seeds, tubers, roots, grains or grasses.

7. The multi-component compositions according to claim 2 to 6, **characterized in that** the biopolymers comprise one or more repeat units selected from the group comprising glycolic acid, lactic acid, hydroxy alkanoic acids, caprolactone, p-dioxanone, trimethylene carbonate, butylene succinate, butylene adipate, monosaccharides, dicarboxylic acid anhydrides, esters of saccharides.

8. The multi-component compositions according to claim 2 to 7, **characterized in that** the biopolymers comprise one or more polymers selected from the group comprising DL-polylactide (DLPLA), D-polylactide (DPLA), L-polylactide (LPLA), polyglycolide (PGA), poly(DL-lactide-co-glycolide) (PGLA), poly(ethylene glycol-co-lactide), polycaprolactone (PCL), poly(L-lactide-co-caprolactone-co-glycolide), poly(dioxanone) (PDO), poly(trimethylene carbonate), polyglyconate, polyhydroxyalkanoates (PHA), polyhydroxybutyrate (PHB), polyhydroxybutyrate-co-hydroxyvalerate (PHBV), polyhydroxyvalerate (PHV), polysaccharides, modified polysaccharides, aliphatic and aromatic copolyesters, poly(1,4-butylene succinate) (PBS), poly(1,4-butylene adipate) (PBA), (poly butadiene adipate co-terephthalate polymer (PBAT), poly(butylene succinate adipate) (PBSA), polyanhydrides, polyorthoesters (POE), plasticized starch with poly(caprolactone), starch-based aliphatic polyesters, polyesteramides (PEA).

9. Processes for the preparation of the base compositions or the multi-component compositions according to claim 1 to 8, **characterized in that** one or more flours, one or more polymers in the form of aqueous polymer dispersions or in the form of water-redispersible polymer powders, and optionally plasticizers, optionally additives and optionally fillers and in case of multi-component compositions one or more biopolymers are mixed or blended.

10. Processes for the preparation of bioplastic materials, **characterized in that** one or more base compositions and/or one or more multi-component compositions according to claims 1 to 8 are subjected to one or more thermomechanical processing methods selected from the group comprising extrusion, kneading, injection moulding, compression moulding, blow moulding, thermoforming and heat welding.

11. Bioplastic materials obtainable by the processes according to claim 10.

12. Use of the bioplastic materials according to claim 11 in the field of packaging materials, packaging containers, food containers, insulation products, cultivation articles, organic waste bags, foils, diaper ingredients or tyre components.

## Patentansprüche

1. Thermoplastisch verarbeitbare Zusammensetzungen (Basiszusammensetzungen), umfassend ein oder mehrere Mehle, ein oder mehrere Polymere, gegebenenfalls Weichmacher, gegebenenfalls Füllstoffe und gegebenenfalls Additive, **dadurch gekennzeichnet, dass** mindestens eines der Polymere mit Schutzkolloid stabilisiert ist und in Form seines in Wasser redispergierbaren Polymerpulvers oder als wässrige Polymerdispersion vorliegt und auf einem oder mehreren ethylenisch ungesättigten Monomeren aus der Gruppe umfassend Vinylester von linearen oder verzweigten Alkylcarbonsäuren mit 1 bis 15 C-Atomen, Methacrylatester und Acrylatester mit Alkoholen mit 1 bis 15 C-Atomen, Vinylaromaten, Olefine, Diene oder Vinylhalogenide basiert, wobei die Zusammensetzungen weniger als 12 Gew.-% Polyvinylalkohol, bezogen auf die Gesamtmenge polymerer Komponenten der Zusammensetzung, enthalten.

2. Thermoplastisch verarbeitbare Zusammensetzungen nach Anspruch 1, umfassend zwei oder mehr Polymere (Mehrkomponentenzusammensetzungen), **dadurch gekennzeichnet, dass** es sich bei mindestens einem der Polymere um ein Biopolymer handelt.

3. Basiszusammensetzungen oder Mehrkomponentenzusammensetzungen nach Anspruch 1 oder 2, **dadurch gekennzeichnet, dass** es sich bei den mit Schutzkolloid stabilisierten Polymeren, die in Form ihrer in Wasser redispergierbaren Polymerpulver oder als wässrige Polymerdispersionen vorliegen, um Homopolymere oder Copolymere handelt, die ein oder mehrere Monomere aus der Gruppe Vinylacetat, Vinylester von α-verzweigten Monocarbonsäuren mit 9 bis 13 Kohlenstoffatomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten.

4. Basiszusammensetzungen oder Mehrkomponentenzusammensetzungen nach Anspruch 1 bis 3, **dadurch gekennzeichnet, dass** Mehl eine Zusammensetzung mit proteinhaltigen und stärkehaltigen Fraktionen, die aus ein und derselben Pflanzenquelle stammen, betrifft, wobei die proteinhaltige Fraktion und die stärkehaltige Fraktion nicht voneinander getrennt worden sind.

5. Basiszusammensetzungen oder Mehrkomponentenzusammensetzungen nach Anspruch 1 bis 4, **dadurch gekennzeichnet, dass** mindestens 80 Gew.-% der in den Basiszusammensetzungen oder Mehrkomponentenzusammensetzungen enthaltenen Stärke durch das Mehl bereitgestellt werden.

6. Basiszusammensetzungen oder Mehrkomponentenzusammensetzungen nach Anspruch 1 bis 5, **dadurch gekennzeichnet, dass** sich das Mehl von Samen, Knollen, Wurzeln, Körnern oder Gräsern ableitet.

7. Mehrkomponentenzusammensetzungen nach Anspruch 2 bis 6, **dadurch gekennzeichnet, dass** die Biopolymere eine oder mehrere Wiederholungseinheiten aus der Gruppe umfassend Glykolsäure, Milchsäure, Hydroxyalkansäuren, Caprolacton, p-Dioxanon, Trimethylencarbonat, Butylensuccinat, Butylenadipat, Monosaccharide, Dicarbonsäureanhydride, Ester von Sacchariden umfassen.

8. Mehrkomponentenzusammensetzungen nach Anspruch 2 bis 7, **dadurch gekennzeichnet, dass** die Biopolymere ein oder mehrere Polymere aus der Gruppe umfassend DL-Polylactid (DLPLA), D-Polylactid (DPLA), L-Polylactid (LPLA), Polyglykolid (PGA), Poly(DL-lactid-co-glykolid) (PGLA), Poly(ethylenglykol-co-lactid), Polycaprolacton (PCL), Poly(L-lactid-co-caprolacton-co-glykolid), Poly(dioxanon) (PDO), Poly(trimethylencarbonat), Polyglykonat, Polyhydroxyalkanoaten (PHA), Polyhydroxybutyrat (PHB), Polyhydroxybutyrat-co-hydroxyvalerat (PHBV), Polyhydroxyvalerat (PHV), Polysaccharide, modifizierte Polysaccharide, aliphatische und aromatische Copolyester, Poly(1,4-butylensuccinat) (PBS), Poly(1,4-butylenadipat) (PBA), (Polybutadienadipat-co-terephthalat-Polymer (PBAT), Poly(butylensuccinatadipat) (PBSA), Polyanhydride, Polyorthoester (POE), weichgemachte Stärke mit Poly(caprolacton), auf Stärke basierende aliphatische Polyester, Polyesteramide (PEA) umfassen.

9. Verfahren zur Herstellung der Basiszusammensetzungen oder Mehrkomponentenzusammensetzungen nach Anspruch 1 bis 8, **dadurch gekennzeichnet, dass** man ein oder mehrere Mehle, ein oder mehrere Polymere in Form von wässrigen Polymerdispersionen oder in Form von in Wasser redispergierbaren Polymerpulvern und gegebenenfalls Weichmacher, gegebenenfalls Additive und gegebenenfalls Füllstoffe und im Fall von Mehrkomponentenzusammensetzungen ein oder mehrere Biopolymere mischt.

10. Verfahren zur Herstellung von Biokunststoffen, **dadurch gekennzeichnet, dass** man eine oder mehrere Basiszusammensetzungen und/oder Mehrkomponentenzusammensetzungen nach den Ansprüchen 1 bis 8 einer oder mehreren thermomechanischen Verarbeitungsmethoden aus der Gruppe umfassend Extrusion, Kneten, Spritzguss, Formpressen, Blasformen, Thermoformen und Thermoschweißen unterwirft.

11. Biokunststoffe, die durch die Verfahren nach Anspruch 10 erhältlich sind.

12. Verwendung der Biokunststoffe nach Anspruch 11 auf dem Gebiet der Verpackungsmaterialien, Verpackungsbehälter, Lebensmittelbehälter, Isolierprodukte, Kultivierungsartikel, Beutel für organischen Abfall, Folien, Windelbestandteilen oder Reifenkomponenten.

## Revendications

1. Compositions traitables thermoplastiques (compositions de base) comprenant une ou plusieurs farines, un ou plusieurs polymères, éventuellement des plastifiants, éventuellement des charges et éventuellement des additifs, **caractérisées en ce qu'**au moins l'un des polymères est stabilisé par un colloïde protecteur et présent sous la forme de sa poudre de polymère re-dispersable dans l'eau ou sous forme d'une dispersion de polymère aqueuse et basé sur un ou plusieurs monomères éthyléniquement insaturés issus du groupe comprenant des esters vinyliques d'acides alkylcarboxyliques linéaires ou ramifiés ayant de 1 à 15 atomes de C, des esters de méthacrylate et des esters d'acrylate avec des alcools ayant de 1 à 15 atomes de C, des substances aromatiques vinyliques, des oléfines, des diènes ou des halogénures de vinyle, ce par quoi les compositions contiennent moins de 12% en poids d'alcool polyvinylique, sur la base de la quantité totale de composants polymères de la composition.

2. Compositions traitables thermoplastiques selon la revendication 1, comprenant deux, ou plus, polymères (compositions multi-composants), **caractérisées en ce qu'**au moins l'un des polymères est un biopolymère.

3. Compositions de base ou compositions multi-composants selon la revendication 1 ou 2, **caractérisées en ce que** les polymères stabilisés par un colloïde protecteur et présents sous la forme de leurs poudres de polymère re-dispersables dans l'eau ou sous forme de dispersions de polymère aqueuses sont des homopolymères ou des copolymères qui contiennent un ou plusieurs monomères issus du groupe constitué par l'acétate de vinyle, les esters vinyliques d'acides monocarboxyliques α-ramifiés ayant de 9 à 13 atomes de carbone, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, et le styrène.

4. Compositions de base ou compositions multi-composants selon les revendications 1 à 3, **caractérisées en ce que** la farine concerne une composition possédant des fractions contenant des protéines et contenant de l'amidon issues d'une seule et même source végétale, où la fraction contenant des protéines et la fraction contenant de l'amidon n'ont pas été séparées l'une de l'autre.

5. Compositions de base ou compositions multi-composants selon les revendications 1 à 4, **caractérisées en ce qu'**au moins 80% en poids de l'amidon contenu dans les compositions de base ou les compositions multi-composants est apporté par la farine.

6. Compositions de base ou compositions multi-composants selon les revendications 1 à 5, **caractérisées en ce que** la farine est dérivée de semences, de tubercules, de racines, de grains ou d'herbes.

7. Compositions multi-composants selon les revendications 2 à 6, **caractérisées en ce que** les biopolymères comprennent un ou plusieurs motifs répétitifs choisis dans le groupe constitué par l'acide glycolique, l'acide lactique, les acides hydroxy-alcanoïques, la caprolactone, la p-dioxanone, le carbonate de triméthylène, le succinate de butylène, l'adipate de butylène, les monosaccharides, les anhydrides d'acide dicarboxylique, et les esters de saccharides.

8. Compositions multi-composants selon les revendications 2 à 7, caractérisées en ce les biopolymères comprennent un ou plusieurs polymères choisis dans le groupe constitué par le DL-polylactide (DLPLA), le D-polylactide (DPLA), le L-polylactide (LPLA), le polyglycolide (PGA), le poly(DL-lactide-co-glycolide) (PGLA), le poly(éthylène glycol-co-lactide), la polycaprolactone (PCL), le poly(L-lactide-co-caprolactone-co-glycolide), la poly(dioxanone) (PDO), le poly(carbonate de triméthylène), le polyglyconate, les polyhydroxyalcanoates (PHA), le polyhydroxybutyrate (PHB), le poly(hydroxybutyrate-co-hydroxyvalérate) (PHBV), le polyhydroxyvalérate (PHV), les polysaccharides, les polysaccharides modifiés, les copolyesters aliphatiques et aromatiques, le poly(succinate de 1,4-butylène) (PBS), poly(adipate de 1,4-butylène) (PBA), le poly(adipate de butadiène-co-téréphtalate) (PBAT), poly(succinate de butylène-co-adipate) (PBSA), les polyanhydrides, les poly(orthoesters) (POE), l'amidon plastifié par de la poly(caprolactone), les polyesters aliphatiques à base d'amidon, les polyesteramides (PEA).

9. Procédés de préparation des compositions de base ou des compositions multi-composants selon les revendications 1 à 8, **caractérisés en ce qu'**une ou plusieurs farines, un ou plusieurs polymères sous la forme de dispersions de polymère aqueuses ou sous la forme de poudres de polymère re-dispersables dans l'eau, et éventuellement des plastifiants, éventuellement des additifs et éventuellement des charges et, dans le cas des compositions multi-composants, un ou plusieurs biopolymères, sont mélangés ou malaxés.

10. Procédés de préparation de matériaux bioplastiques, **caractérisés en ce qu'**une ou plusieurs compositions de base et/ou une ou plusieurs compositions multi-composants selon les revendications 1 à 8 sont soumises à une ou plusieurs méthodes de traitement thermomécanique choisies dans le groupe constitué par l'extrusion, le malaxage, le moulage par injection, le moulage par compression, le moulage par soufflage, le thermoformage et la thermosoudure.

11. Matériaux bioplastiques pouvant être obtenus par les procédés selon la revendication 10.

12. Utilisation de matériaux bioplastiques selon la revendication 11, dans le domaine des matériaux d'emballage, des conteneurs d'emballage, des conteneurs alimentaires, des produits d'isolation, des articles de culture, des sacs à déchets organiques, des feuilles, des ingrédients pour couches ou des composants pour pneus.
